(19) Europäisches Patentamt
European Patent Office
Office européen des brevets

(11) **EP 4 145 233 A1**

(12) **EUROPÄISCHE PATENTANMELDUNG**

(43) Veröffentlichungstag:
08.03.2023 Patentblatt 2023/10

(21) Anmeldenummer: **21194737.9**

(22) Anmeldetag: **03.09.2021**

(51) Internationale Patentklassifikation (IPC):
**G05B 19/42** *(2006.01)* **B25J 9/16** *(2006.01)*
**B23Q 35/128** *(2006.01)*

(52) Gemeinsame Patentklassifikation (CPC):
**G05B 19/4207; B23K 26/032; B23K 26/08;**
**B23K 26/38;** B23Q 35/128; B25J 9/1684;
B25J 9/1697; G05B 2219/36414;
G05B 2219/36441; G05B 2219/37359;
G05B 2219/37575; G05B 2219/40057;
G05B 2219/45041; G05B 2219/4708

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Bystronic Laser AG**
**3362 Niederönz (CH)**

(72) Erfinder:
• **HAAS, Titus**
**4800 Zofingen (CH)**
• **LÜDI, Andreas**
**3400 Burgdorf (CH)**
• **WITTWER, Stefan**
**3360 Herzogenbuchsee (CH)**

(74) Vertreter: **Schwarz, Claudia**
**Schwarz + Kollegen**
**Patentanwälte**
**Hermann-Schmid-Straße 10**
**80336 München (DE)**

(54) **KONTURTREUEBESTIMMUNG FÜR EINE LASERSCHNEIDMASCHINE**

(57) In einem Aspekt betrifft die vorliegende Erfindung eine Konturprüfvorrichtung (1000) zum Berechnen von Bahnabweichungen von einer Soll-Bahn (SB) eines Schneidkopfes (10) einer Laserbearbeitungsmaschine. Die Konturprüfvorrichtung (1000) umfasst eine Referenztexturschnittstelle (100) zum Einlesen einer Referenztextur (RT) entlang der Soll-Bahn (SB), die insbesondere zum Schneiden einer Kontur definiert ist, eine Steuerung (200), die zur Ansteuerung der Laserbearbeitungsmaschine bestimmt ist, so, dass der Schneidkopf (10) die Soll-Bahn (SB) abfährt; zumindest eine Kamera (K), wobei die Steuerung zum Ansteuern der zumindest einen Kamera (K) zum kontinuierlichen Erfassen von überlappenden Einzelbildern der Referenztextur (RT) entlang der abgefahrenen Bahn bestimmt ist; einen Prozessor (300), der zur Ausführung eines Bildverarbeitungs-Algorithmus zur Rekonstruktion der mit dem Schneidkopf abgefahrenen Bahn aus den erfassten überlappenden Einzelbildern der Referenztextur (RT) bestimmt ist; und wobei der Prozessor (300) zum Berechnen von Abweichungen zwischen der Rekonstruktion der mit dem Schneidkopf abgefahrenen Bahn und der Soll-Bahn (SB) bestimmt ist. Die Konturprüfvorrichtung (1000) umfasst weiterhin eine Ausgabeschnittstelle (400), die zur Ausgabe der berechneten Abweichungen bestimmt ist.

Figur 10

EP 4 145 233 A1

**Beschreibung**

Die Erfindung liegt auf den Gebieten der Laserschneidtechnologie und betrifft insbesondere eine Bestimmung der Konturtreue.

Die Anforderungen an Laserschneidmaschinen bezüglich Produktivität und Genauigkeit steigen laufend. Ziel ist, ein Werkstück/Teil möglichst schnell und möglichst genau schneiden zu können. Allerdings sind diesen beiden Zielen Grenzen gesetzt bzw. die Ziele «möglichst schnell» und «möglichst genau» sind gar gegenläufig. Je schneller beispielsweise um eine Ecke geschnitten werden will, umso geometrisch ungenauer wird dieser Eckenschnitt, da aufgrund der Maschinen-, Achsen-, Schneidbrücken- und Schneidkopf-Trägheit und Nachgiebigkeit (Masseträgheit) die tatsächliche Schneidkontur von der Sollkontur aufgrund von Überschwingern abweichen wird. Und dabei kann die exakte Lage des Laserstrahls typischerweise nicht gemessen werden, denn interne Encoder-Masssystemen auf den Antriebsachsen nur indirekt messen und die oben beschriebene Trägheitsmomente und/oder Nachgiebigkeit nicht berücksichtigen können.

Weitere Gründe für die Abweichungen zwischen Ist- und Soll-Schneidkonturen sind Schwingungen des Gantry-Systems bzw. des Roboters, an dem der Bearbeitungskopf befestigt ist, oder Schwingungen des Werkstücks bzw. der Werkstückauflage, die zu Überschwingern beim Schneiden entlang der Schneidkontur führen. Weitere Gründe für Bahnabweichungen können auch hervorgerufen werden durch Reibung, Haftreibung, Umkehrspiel, falsche Kompensationswerte, etc.

Damit nun das geschnittene Teil innerhalb einer gewünschten Toleranz (Bahnabweichung/Konturfehler) liegen, werden meist die dynamischen Grenzen einer Maschine (insb. im Bereich von kleinen Radien und Ecken) eingeschränkt, was zu einer reduzierten Produktivität führt.

Verschiedene Ansätze um den Zielkonflikt zwischen «Bahngenauigkeit» und «Schneidgeschwindigkeit» zu reduzieren sind bekannt.

Die DE 10 2018 217 940 A1 schlägt ein Verfahren mit Kamera und Reflexionsmuster vor, um die Konturgenauigkeit zu erhöhen. Dabei wird eine Kamera entlang der Soll-Bahn einer Teilekontur bewegt, welche das Reflexionsmuster der Werkstückoberfläche in überlappenden Teilbereichen ortsaufgelöst erfasst und daraus Abweichungen der gefahrenen Bahn zur Soll-Bahn misst. Insbesondere werden die Positionsinkremente entlang der Teilekontur durch das Optimum einer Ähnlichkeitsfunktion bestimmt, welche auch in DE 10 2005 022 095 A1 beschrieben wird.

Die EP 131 4510 A1 schlägt ein bildgebendes Verfahren vor, um Abweichungen von einer dreidimensionalen Soll-Schweisslinie zu erfassen. Die Abweichung wird für ein laufendes Anpassen (Teaching) der gefahrenen Bahn verwendet.

Weiter ist die DE 10 2011 103 282 A1 bekannt, welche mit einer bewegten Kamera den Bearbeitungsbereich eines hochenergetischen Laserstrahls auf einer Werkstückoberfläche erfasst. Die erfassten Bilder entlang der Soll-Bahn werden mit einem Soll-Bild verglichen, das die optimale Bearbeitung Schweissprozesses repräsentiert.

Die dazu analoge Aufgabe für den Laserschneidprozess löst die DE 10 2011 003 717 A1. Dabei werden insbesondere die beim Laserschneiden entstehenden Werkstückkanten mit einer Kamera erfasst und auf Bearbeitungsqualität ausgewertet.

Verschiedene Ansätze zur modellbasierten Schätzung von Konturfehlern sind bekannt. Um die kinematischen Eigenschaften von Werkzeugmaschinen zu charakterisieren, gibt es verschiedene Arten von Modellen. Die Modelle basieren auf Differentialgleichungen, wie beispielsweise von Zirn und Weikert (Modellbildung und Simulation hochdynamischer Fertigungssysteme, https://www.springer.com/de/book/9783540258179 ). Ein Zwei-Massen-Modell wurde von Haas (Set Point Optimisation for Machine Tools, https://doi.org/10.3929/ethz-b-000271470 ) verwendet, wobei die Position des Laserstrahls mittels einem Differentialgleichungssystem 4. Ordnung beschrieben wurde.

Maschinenmodelle zur Positionsschätzung können auch durch Modellreduktionen von Finite-Elemente-Modellen, FEM, erstellt werden, siehe beispielsweise (N. Lanz, D. Spescha, S. Weikert und K. Wegener, "Efficient Static and Dynamic Modelling of Machine Structures with Large Linear Motions," International Journal of Automation Technology, Bd. 12, pp. 622-630, 2018).

Modellbasierte Konturfehlerschätzungen/-Kompensationen sind nur so gut, wie die Modellgüte es zulässt. Meist gibt es einen Kompromiss zwischen Modellgüte und Modellkomplexität zu finden. Nichtlineare Effekte können selten oder gar nicht abgebildet werden, weshalb eine Messung des effektiven Konturfehlers notwendig wird. Zudem werden in den meisten Modellen zur Konturfehlerschätzung die Umgebungsbedingungen, wie z.B. der im Einsatz befindliche Laserschneidkopf, insbesondere dessen Gewichtsverteilung, die Düse, die Aktoren etc., nicht berücksichtigt.

Ausgehend von diesem Stand der Technik hat sich die Erfindung zur Aufgabe gestellt, die Konturtreue für eine Schneidaufgabe zu bestimmen. Insbesondere soll die Konturtreuebestimmung zur Korrektur bzw. Kompensation bereits vor dem Schneiden erfolgen, um fehlerhaft geschnittenen Teile zu reduzieren. Insgesamt soll die Qualität des Schneidergebnisses verbessert werden.

Diese Aufgabe wird durch die beiliegenden Patentansprüche gelöst, insbesondere durch ein computer-implementiertes Verfahren, eine Verwendung dieses Verfahrens zur Kompensationsberechnung, eine Konturprüfvorrichtung und ein Computerprogramm.

Gemäß einem ersten Aspekt wird diese Aufgabe gelöst durch ein computer-implementiertes Verfahren zum Berechnen von Bahnabweichungen von einer (definierten oder vorgegebenen) Soll-Bahn eines Schneidkopfes einer Laserbearbeitungsmaschine. Das Verfahren kann folgende Verfahrensschritte umfassen:

(1) Vorsehen einer auf oder entlang der Soll-Bahn verlaufenden Referenztextur;
(2) Bereitstellen von ersten Steuerbefehlen zum Abfahren der Soll-Bahn mit dem Schneidkopf und von zweiten Steuerbefehlen zum kontinuierlichen Erfassen von überlappenden Einzelbildern der Referenztextur auf oder entlang der abgefahrenen Bahn, mittels wenigstens einer Kamera;
(3) Rekonstruktion der mit dem Schneidkopf abgefahrenen Bahn aus den erfassten überlappenden Einzelbildern der Referenztextur mittels eines Bildverarbeitungs-Algorithmus;
(4) Berechnen von Abweichungen zwischen der Rekonstruktion der mit dem Schneidkopf abgefahrenen Bahn und der Soll-Bahn. Vorzugsweise werden die berechneten (Kontur-) Abweichungen auf einer Ausgabeschnittstelle ausgegeben.

Mit dieser Lösung ist eine Reihe von Vorteilen verbunden. So ist es möglich, die Konturgenauigkeit und Konturtreue abhängig von den jeweils aktuellen Umgebungsbedingungen zu bestimmen, wie z.B. abhängig von der Antriebsmechanik des Laserschneidkopfes, der Beschleunigung und Geschwindigkeit der Antriebsmechanik, des Gewichtes bzw. der Gewichtsverteilung des Laserschneidkopfes, der verwendeten Schneiddüse, der jeweiligen Kontur bzw. dem Schneidplan (sind z.B. feine Konturen exakt oder grobe Konturen mit hohen Toleranzen zu schneiden). Des Weiteren kann die Konturtreue noch vor dem Schneiden ermittelt werden und damit ohne ein möglicherweise fehlerbehaftetes Schneiden. Ferner ist die Lösung sehr genau.

Im Folgenden werden die in dieser Schrift verwendeten Begrifflichkeiten näher erläutert.

Die Referenztextur wird vorzugsweise direkt auf oder entlang der Soll-Bahn (z.B. parallel dazu) appliziert oder eingeblendet, die der Laserschneidkopf abfahren soll. Die Referenztextur muss so appliziert, aufgebracht oder eingeblendet werden, dass sie vom Sichtfeld oder Field of View (FOV) der Kamera detektierbar ist. Vorzugsweise wird die Referenztextur so über der Soll-Bahn aufgebracht, dass ein Überschneidungsbereich entsteht. Die Referenztextur ist üblicherweise größer als die Soll-Bahn, die als Linie oder Kurve vorgegeben ist. Die Referenztextur kann eine Größe, insbesondere Höhe, aufweisen, die in einem Bereich zwischen $10\,\mu m$ und 10mm liegt, wobei die Größe bzw. Höhe hier senkrecht zu einer Abfahr-Richtung des Schneidkopfes definiert ist. Die seitliche, also in Abfahr-Richtung sich erstreckende Länge oder Breite ist variabel und abhängig vom Schneidplan bzw. der Kontur. Die Referenztextur dient zur örtlichen Referenzierung zwischen dem Bildraum und dem Werkstückraum und dient als Grundlage für den Bildverarbeitungsalgorithmus, wie z.B. einen Bildfügealgorithmus, image stitching, der erfassten Bilder. Die Referenztextur kann vorzugsweise als Zahlenreihe, insbesondere als fortlaufende Zahlenreihe und/oder als Buchstabenfolge eines Alphabets, insbesondere fortlaufende Buchstabenfolge oder als nichtperiodisches, nicht-lineares und nicht repetitives Muster ausgebildet sein. Die Referenztextur kann z.B. ein Blech oder ein flächiges Objekt sein, dessen Außenkontur der Soll-Bahn entspricht. Die Referenztextur kann ein Muster sein, das vorher auf ein Blech aufgebracht, z.B. graviert, wurde und/oder eine natürliche Textur/Oberflächenmikrostruktur entlang der Soll-Bahn (bei langsam Abfahren ermittelt).

Die Kamera kann vorzugsweise koaxial oder zentrisch zur Laserstrahloptik angeordnet sein und zur Detektion der Prozesszone dienen. Es können auch mehrere Kameras ausgebildet sein. Die Kamera kann mit einer Beleuchtungsquelle gekoppelt sein. Die Kamera kann auch mit einem Offset und nicht koaxial befestigt sein; dann muss der Offset bekannt sein und wird bei der Rekonstruktion der mit dem Schneidkopf tatsächlich abgefahrenen Bahn berücksichtigt.

Die Soll-Bahn entspricht der zu schneidenden Kontur. Die Soll-Bahn kann aus einem Schneidplan eingelesen werden. Die Soll-Bahn entspricht der gewünschten, im Schneidplan definierten Geometrie.

Die Abweichung zwischen einer tatsächlicher Position (gemessen oder rekonstruiert) und Positionen der Soll-Bahn entspricht dem Konturfehler.

Der Bildverarbeitungs-Algorithmus kann ein Image-Stitching-Algorithmus sein, der auf überlappenden Bereichen angewendet wird und somit modifiziert ist und/oder ein Feature-Mapping Algorithmus sein, der auf einem feature mapping von einzelnen Bildern mit überlappenden Bereichen entlang oder auf einer Kontur basiert, die mit einem "virtuellen" Gesamtbild verglichen werden, um die Abweichung zu ermitteln. Der Image-Stitching-Algorithmus kann z.B. nur in relevanten, da untreue-riskante Bereichen angewendet werden, und dient dann für eine "hochauflösende Erkennung" der Abweichung.

Der im Stand der Technik bekannte Image-Stitching-Algorithmus muss zur Verwendung für die Konturabweichungsberechnung modifiziert werden, insbesondere um robust gegenüber störenden Pixelwertmustern in den erfassten überlappenden Bildern zu sein. Neben stationären Bildanteilen sind geringe Kontraste im Überlappungsbereich ein weiteres prominentes Beispiel, welche die Konturen zwischen Merkmalen und umgebender Oberfläche ganz oder teilweise unterbrechen und zu schlechten Ergebnissen für den Anwendungsfall (Laserschneiden) führen können. Dies führt zur Reduktion der auswertbaren dynamischen Pixelwertinformation, und die integrierten Differenznormen gleichen sich an. Dies wird erfindungsgemäß vermieden. Eine weitere Störung liegt in periodischen oder quasiperiodischen Bildanteilen (z.B. Schleif- oder Walzspuren), welche bei Aliasing unerwünschte Minima der integrierten Differenznorm ergeben können. Weitere Beispiel von störenden Pixelwertmustern können Reflexionen von optischen Elementen, Verschmutzung des optischen Pfades (Schutzglas, Schneid-Fokussierlinse, Kameralinse), Oberflächenstruktur des Blechs (Rauheit, Reflektivität), Beleuchtungsstromstärke oder andere Parameter sein.

Die Modifikation des bekannten Bildfüge-Algorithmus kann sich in einer ersten Ausführungsform der Erfindung auf die Reduktion der Anzahl der Überlappungsgebiete durch Verwenden der Achsinkremente beziehen. Daraus können Teilgebiete, insbesondere größenvariable Teilgebiete, bestimmt werden, in denen das gesuchte Minimum der integrierten Differenznormen erwartet wird. Mit dem beschriebenen Verfahren erhält man typischerweise an den Rändern der möglichen Überlappungsgebiete niedrige Werte der integrierten Differenznormen. Dieser Umstand kann die Suche nach ihrem Minimum erschweren. Deshalb wird in einer zweiten Ausführungsform der Erfindung vorgeschlagen, dies mit einer Gewichtung der integrierten Differenznormen je nach ihrer Lage zu kompensieren.

Gemäß einer bevorzugten Ausführungsform der Erfindung kann die Referenztextur in einer Konfigurationsphase aus einem vorgegebenen Musterschatz, der vorzugsweise in einem Speicher gespeichert ist, ausgewählt und/oder z.B. über eine Mensch-Maschine-Schnittstelle, Human-Machine-Interface, HMI, eingelesen werden. Vorzugsweise wird die Referenztextur automatisch bestimmt und auf dem HMI als Vorschlag präsentiert. Der Anwender erhält daraufhin die Möglichkeit, den Vorschlag zu akzeptieren oder noch zu modifizieren. Kumulativ oder alternativ können auf dem HMI Schaltflächen bereitgestellt werden, über die der Anwender die Referenztextur sozusagen selbst konfigurieren kann. Dies hat den Vorteil, dass das Konturtreuebestimmungsverfahren auch dann ausführbar ist, wenn z.B. die Datenverbindung zum Speicher mit den gespeicherten Referenztexturen vorübergehend unterbrochen ist.

In einer bevorzugten Ausführungsform der Erfindung ist es vorgesehen, dass die Referenztextur konfigurierbar ist und insbesondere in Abhängigkeit von der verwendeten Düse (Düsenbreite), der mechanischen Aktoren, des Schneidplans bzw. der darin definierten Kontur und/oder von Schneidparametern (z.B. Fokuslage) konfigurierbar ist.

In einer weiteren bevorzugten Ausführungsform der Erfindung ist es vorgesehen, dass das Vorsehen der Referenztextur erfolgt, indem die Referenztextur mittels dem Schneidkopf des Bearbeitungslasers in einer separaten Gravierfahrt auf das Werkstück graviert wird (Makrostruktur). Alternativ oder kumulativ kann die Referenztextur vorgesehen werden, indem ein mit der Referenztextur versehenes flächiges Objekt unterhalb des Schneidkopfes des Bearbeitungslasers und über dem Werkstück (z.B. ortsfest, "unverrutschbar" aufgelegt) platziert wird (Makrostruktur). Bei dem flächigen Objekt kann es sich z.B. um ein Referenzmaterial, insbesondere Referenzblech handeln. Es ist kein spezielles Blech nötig; es kann z.B. gleich das Werkstück verwendet werden, welches als nächstes bearbeitet werden soll. Alternativ oder kumulativ kann auch die Oberflächenstruktur des zu schneidenden Werkstückes als Referenztextur verwendet werden (Microstruktur).

In einer weiteren vorteilhaften Ausführungsform der Erfindung erfolgt das Abfahren der Soll-Bahn in Schritt (2) ohne ein Aktivieren des Lasers, also in einer Kalibrierfahrt und ohne, dass der Laser aktiviert ist bzw. ohne zu schneiden.

In einer weiteren vorteilhaften Ausführungsform der Erfindung wird das Abfahren der Soll-Bahn in Schritt (2) mit zumindest einer konfigurierbaren Kalibriergeschwindigkeit ausgeführt. Kumulativ oder alternativ kann auch die Beschleunigung und/oder der Ruck konfiguriert werden über entsprechende Schaltflächen auf der HMI. Insbesondere können die genannten Kalibrierfahrtparameter (Geschwindigkeit, Beschleunigung, Ruck etc.) konturpunkt-spezifisch konfiguriert werden. Dies hat den Vorteil, dass in Konturbereichen, die ein hohes Risiko für eine Konturabweichung aufweisen (z.B. in Ecken oder engen Radien) die Kalibrierfahrt spezifisch konfiguriert werden kann. Die Kalibrierfahrtparameter können auch automatisch algorithmisch berechnet und als Vorschlag zum Bestätigen oder Verwerfen durch den Anwender auf dem HMI ausgegeben werden.

In einer weiteren vorteilhaften Ausführungsform der Erfindung wird als Soll-Bahn zumindest eine Kontur aus einem Schneidplan bestimmt, wobei in Schritt (2) die Soll-Bahn zumindest zweimal abgefahren wird, nämlich:

1. erstens mit zumindest einer Kalibriergeschwindigkeit in zumindest einer ersten Kalibrierfahrt und
2. zweitens mit einer Produktivgeschwindigkeit in einer zweiten Kalibrierfahrt, wobei die Kalibriergeschwindigkeit geringer, insbesondere 80% bis 99% geringer ist, als die Produktivgeschwindigkeit.

Ebenso liegt es im Rahmen der Erfindung, mehr als zwei Kalibrierfahrten auszuführen und/oder Kalibrierfahrten mit anderen sich jeweils unterscheidenden Kalibrierfahrtparametern.

In einer weiteren vorteilhaften Ausführungsform der Erfindung können zur Rekonstruktion der mit dem Schneidkopf abgefahrenen Bahn mittels des Bildverarbeitungs-Algorithmus und insbesondere mit dem Image-Stitching-Algorithmus, zusätzlich zu den erfassten Einzelbildern Encoder-Messwerte von beteiligten Maschinenachsen verwendet werden, um den Bildverarbeitungs-Algorithmus robuster und/oder schneller zu machen. In diesem Kontext ist ausdrücklich zu betonen, dass die die Encoder-Werte lediglich dazu dienen, die algorithmische Bildverarbeitung und insbesondere das Image-Stitching zu beschleunigen bzw. robuster zu gestalten. Die Encoderwerte helfen hier, dass beim Image-Stitching nur in einem plausiblen/sinnvollen Bildbereich nach bester Bild-Überlappung gesucht wird. Daher ist es auch nicht notwendig, dass die Encoderwerte mit einer sehr hohen Genauigkeit bereitgestellt werden müssen.

In einer weiteren vorteilhaften Ausführungsform der Erfindung können die zweiten Steuerbefehle das Aktivieren oder Einschalten einer Beleuchtungsquelle auslösen, so dass z.B. synchron zu dem Erfassen der Einzelbilder eine Beleuchtungsquelle, insbesondere ein Beleuchtungslaser, eingeschaltet wird. Dies dient zur Optimierung der Bilderfassung und Ausleuchtung der Prozesszone. Die Beleuchtungsquelle kann in oder an der Kamera angeordnet sein oder an einer anderen Position, und direkt oder indirekt (durch Reflexion) auf die Prozesszone wirken.

In einer weiteren vorteilhaften Ausführungsform der Erfindung kann das Abfahren der Soll-Bahn in Schritt (2) mehrfach und/oder mit unterschiedlichem Vorschub und/oder mit unterschiedlicher Beschleunigung und/oder mit unterschiedlichen Kalibrierfahrtparametern ausgeführt werden. Die Produktivgeschwindigkeit ist die Geschwindigkeit, mit der später auch produktiv geschnitten werden soll. Zurzeit wird die Geschwindigkeit (Produktivgeschwindigkeit und Kalibriegeschwindigkeit) durch die Schneidparameter vorgegeben. Zumindest die Kalibriegeschwindigkeit kann durch den Bediener an der Maschine angepasst werden. Die Kalibriegeschwindigkeit kann aber auch von einer alternativen Datenquelle (cloud, Schneidplan, externer Speicher etc.) stammen bzw. eingelesen werden.

In einer weiteren vorteilhaften Ausführungsform der Erfindung kann der Bildverarbeitungsalgorithmus als Image Stitching-Algorithmus ausgebildet sein und aus einer Folge von N Einzelbildern N-1 Verschiebevektoren (Weginkremente) rekonstruieren, wobei N eine natürliche Zahl grösser als 2 ist. Der Image Stitching-Algorithmus integriert die Differenznormen über alle Überlappungen im Suchbereich der aufeinanderfolgenden Einzelbilder. Zwei aufeinander folgende Einzelbilder (auch verkürzt: Bilder genannt) werden im Suchbereich gegeneinander verschoben. Dadurch werden verschiedene Überlappungsvarianten realisiert, bis das Minimum gefunden ist. Der Suchbereich ist dabei mit Vorteil die angenommene Nachbarschaft des gesuchten Minimums der Pixelwertabweichung im überlappenden Bereich. Begriffe und Verfahren sind etwa in "Computer Vision", L. Shapiro und G. Stockman, Prentice Hall, p.251 beschrieben.

Der hier umgesetzte Algorithmus weicht vom publizierten Image Stitching Algorithmus insofern ab, als dass er auch für möglichst geringe Kontraste an der Werkstückoberfläche funktioniert. Dazu werden mehrere Modifikationen an dem publizierten Image Stitching-Algorithmus vorgenommen.

Erstens wurde zu Gunsten der Berechnungsgeschwindigkeit auf den Einsatz der beschriebenen Korrelationsoperationen verzichtet und stattdessen die ebenfalls gebräuchliche und die schnellere integrierte Differenznorm aller Pixelwerte in Überlappungen eingesetzt.

In einer weiteren vorteilhaften Ausführungsform der Erfindung kann der Image Stitching-Algorithmus zweitens auf die integrierten Differenznormen eine örtliche Gewichtungs-und/oder Näherungsfunktion anwenden. Das Bild der Differenznormen kann drittens gewichtet werden, um Abweichungen (besonders an den Rändern des Suchbereichs) zu einer Näherungsfunktion zu reduzieren. Die Näherungsfunktion kann genutzt werden, um das Minimum der optimalen Bildüberlappung auf Subpixelgenauigkeit zu bestimmen.

In einer weiteren vorteilhaften Ausführungsform der Erfindung kann aus den berechneten Abweichungen ein Abweichungsmodell berechnet werden. Kumulativ oder alternativ kann aus den berechneten Abweichungen und erfassten Positionskoordinaten des Schneidkopfes auf einem Schneidtisch (erfasster Arbeitsraum) ein Abweichungsmodell berechnet werden.

Das Berechnen von Bahnabweichungen zur Konturfehlerbestimmung kann grundsätzlich an unterschiedlichen ausgewählten Bereichen auf dem Werkstück, das auf einem Arbeitstisch positioniert ist, ausgeführt werden. Damit wird es z.B. möglich, die kritischen Bereiche zur Konturfehlerbestimmung auszuwählen, wie solche mit vielen engen Radien oder komplexen Trajektorieanforderungen. Dies kann z.B. unter Abgleich mit dem zu schneidenden Material und/oder mit Vorgaben aus dem Schneidplan ausgeführt werden, z.B. unter Berücksichtigung des Betrags der Beschleunigung oder der Wegkrümmung. Ersteres, weil auch längs einer Geraden Abweichungen von den Sollinkrementen auftreten können. Diese beeinträchtigen zwar weniger die Konturgenauigkeit, können u.U. aber zu lokalen Unregelmäßigkeiten im Bearbeitungsprozess führen.

Gemäß einem weiteren Aspekt wird die Aufgabe gelöst durch die Verwendung des vorstehend beschriebenen Verfahrens zum Berechnen einer konturfehlerkorrigierten SchneidbahnBeispielsweise kann die konturfehlerkorrigierte Schneidbahn durch Berechnen eines Offsets für die Geschwindigkeit oder für andere Schneidparameter in Bezug auf einen Punkt auf der Kontur ausgeführt werden, wobei der Offset aus den bestimmten Abweichungen berechnet wird. Grundsätzlich wird die Geschwindigkeit dort verringert, wo hohe Konturabweichungen in der Kalibrierfahrt erfasst worden sind. Im Stand der Technik sind Modelle erwähnt, die auch dazu verwendet werden können, erfasste Bahnabweichungen zu berücksichtigen und damit zielführendere Sollbahnen den Achsantrieben vorzugeben, so dass kleinere Bahnabweichungen resultieren. Die vorliegende Erfindung hingegen löst das genannte Problem genauer und spezifischer und ohne aufwändige Modellberechnungen, indem Bahnabweichungen, insbesondere in Ecken, die aufgrund von Überschwingern entstanden sind, dadurch kompensiert werden, indem die Beschleunigung bzw. das Bremsen des Schneidkopfes angepasst wird, z.B. durch früheres Einleiten der Bremsung gegen eine Ecke hin.

Vorstehend wurde die Lösung der Aufgabe anhand des computer-implementierten Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Vorrichtung, ein System oder auf ein Computerprogrammprodukt gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Speichern" von Daten mit einer Speichereinheit und entsprechenden Anweisungen zum Schreiben von Daten in den Speicher durchgeführt werden. Um Redundanz zu vermeiden, wird die Vorrichtung deshalb nicht noch einmal explizit beschrieben, obwohl es auch in den alternativen Ausführungsformen, die in Bezug auf das Verfahren beschrieben sind, verwendet werden kann. Die vorstehend im Zusammenhang mit dem Verfahren beschriebenen bevorzugten Ausführungsform der Erfindung werden also nicht explizit für die Vorrichtung wiederholt.

In einem weiteren Aspekt bezieht sich die Erfindung auf eine Konturprüfvorrichtung zum Berechnen von Bahnabweichungen von einer Soll-Bahn eines Schneidkopfes einer Laserbearbeitungsmaschine, umfassend:

- Eine Referenztexturschnittstelle zum Einlesen einer Referenztextur auf oder entlang der Soll-Bahn, die insbesondere zum Schneiden einer Kontur definiert ist;
- Eine Steuerung, die zur Ansteuerung der Laserbearbeitungsmaschine bestimmt ist, so, dass der Schneidkopf die Soll-Bahn abfährt;
- Zumindest eine Kamera, wobei die Steuerung zum Ansteuern der zumindest einen Kamera zum kontinuierlichen Erfassen von überlappenden Einzelbildern der Referenztextur auf oder entlang der abgefahrenen Bahn bestimmt ist;
- Einen Prozessor, der zur Ausführung eines Bildverarbeitungs-Algorithmus zur Rekonstruktion der mit dem Schneidkopf abgefahrenen Bahn aus den erfassten überlappenden Einzelbildern der Referenztextur bestimmt ist; und
- wobei der Prozessor zum Berechnen von Abweichungen zwischen der Rekonstruktion der mit dem Schneidkopf abgefahrenen Bahn und der Soll-Bahn bestimmt ist; und wobei die Konturkorrekturvorrichtung weiterhin umfasst:
- eine Ausgabeschnittstelle, die zur Ausgabe der berechneten Abweichungen bestimmt ist. In einem weiteren Aspekt bezieht sich die Erfindung auf ein Computerprogramm, umfassend Befehle, die bei der Ausführung des Computerprogramms durch einen Computer diesen veranlassen, das Verfahren wie vorstehend beschrieben auszuführen. Dabei ist es auch möglich, dass das Computerprogramm auf einem von einem Computer lesbaren Medium gespeichert ist.

In der folgenden detaillierten Figurenbeschreibung werden nicht einschränkend zu verstehende Ausführungsbeispiele mit deren Merkmalen und weiteren Vorteilen anhand der Zeichnung besprochen.

**Kurze Beschreibung der Figuren**

Fig. 1        zeigt eine schematische Ansicht eines Schneidkopfes zur Bearbeitung eines Werkstücks;

Fig. 2        zeigt eine exemplarische und vereinfachte Darstellung einer Soll-Bahn und einer mit dem Schneidkopf real abgefahrenen Bahn;

Fig. 3        zeigt die Soll-Bahn und die erfassten überlappenden Einzelbilder einer Referenztextur;

Fig. 4        zeigt ein Beispiel einer Abfolge von erfassten überlappenden Einzelbildern;

Fig. 5        zeigt anhand eines Beispiels ein Überschwingen insbesondere in einer Ecke;

Fig. 6        ist ein Beispiel einer Referenztextur, die auf ein Werkstück graviert wurde;

Fig. 7        zeigt ein weiteres Beispiel einer Referenztextur und

Fig. 8        zeigt das Verfahren zur Berechnung von Bahnabweichungen mit zwei alternativen Methoden;

Fig. 9        zeigt eine Darstellung der überlappenden Verschiebeberechnungen anhand eines Image-Stitching-Algorithmus;

Fig. 10      zeigt ein Blockdiagramm einer Konturprüfvorrichtung gemäß einer bevorzugten Ausführungsform der Erfindung;

Fig. 11    ein Ablaufdiagramm des Konturprüfverfahrens gemäß einer bevorzugten Ausführungsform der Erfindung.

**Detaillierte Beschreibung der Erfindung**

Die vorliegend vorgestellten Lösungsansätze dienen zur Überwachung der Konturtreue und insbesondere vor Ausführung eines Laserschneidvorganges.

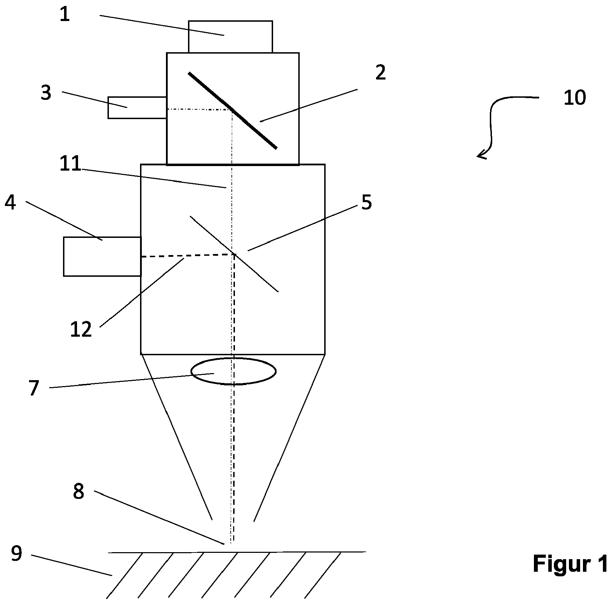

**Fig. 1** zeigt einen Schneidkopf 10 einer Laserbearbeitungsmaschine, der eine Kamera K adaptiert hat, deren Sichtfeld (FoV, field of view) idealerweise koaxial zum Bearbeitungslaserstrahl auf den Prozess schaut. Mit dieser Anordnung der Kamera K wird stets die Prozess- bzw. Schneidzone verfolgt, was ermöglicht, dass allfällige Konturabweichungen festgestellt werden können. Zur weiteren Optimierung der Prozessbeobachtung ist eine koaxiale Prozessbeleuchtung 3 adaptiert, welche den Prozessort 8 auf dem Werkstück 9 beleuchtet. Im Strahlengang 12 des Laserstrahls sind optische Umlenkelemente 5 angeordnet. Eine Laserquelle 4 kann den Laserstrahl über geeignete optische Elemente, wie z.B. optische Linsen 7 auf das Werkstück 9 fokussieren.

Zur Bestimmung möglicher Bahnabweichungen ist mit oben beschriebenem Schneidkopf 10 vorgeschlagen, in einem Kalibrierverfahren die Bahnabweichungen (insb. bei Ecken) zu ermitteln, entsprechende Korrekturgrössen zu errechnen und diese dann für und während der produktiven Teilebearbeitung anzuwenden, wodurch die Bahnabweichungen geringer und/oder die Teilezeit bei gleichbleibender Bahnabweichung reduziert wird.

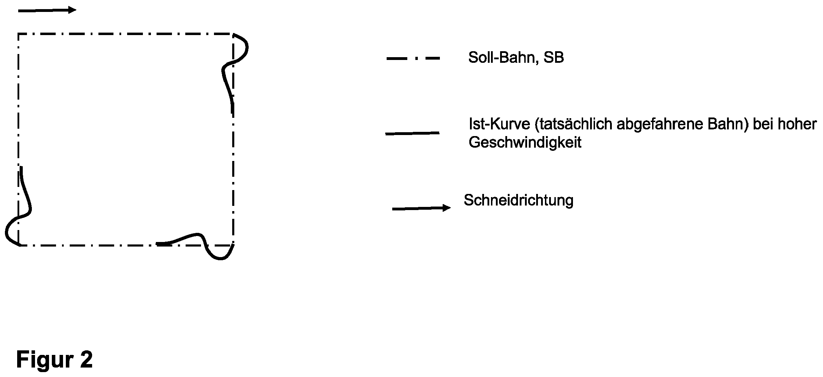

Wie in **Fig. 2** schematisch dargestellt, erfolgen Konturabweichungen insbesondere in Ecken. Die Soll-Bahn ist in Fig. 2 als Strich-Punkt-Linie dargestellt und die Schneidrichtung ist mit dem Pfeil gekennzeichnet. Je nach Geschwindigkeit (Vorschub des Schneidkopfes) weicht die tatsächlich gefahrene Bahn (in Fig. 2 mit durchgezogener Linie dargestellt) von der Soll-Bahn SB ab. Insbesondere bei hohen Geschwindigkeiten und Beschleunigungen wird die tatsächlich mit dem Schneidkopf abgefahrenen Ist-Bahn von der Soll-Bahn abweichen. In den Ecken wird die Ist-Bahn typischerweise die Soll-Bahn überschwingen.

Die zu erwartenden Bahnabweichungen können dynamikabhängig sein. Je höher die Achsbeschleunigungen und Geschwindigkeiten gewählt werden, umso grösser sind die zu erwartenden Abweichungen.

Um dies zu vermeiden, werden automatisch berechnete Anpassungen vorgenommen, die auf Basis von berechneten Konturabweichungen berechnet werden.

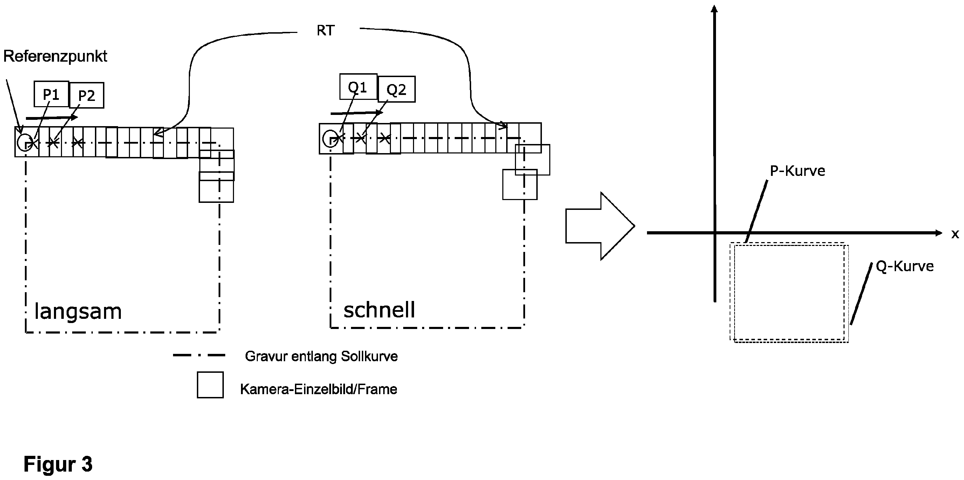

Fig. 3 zeigt schematisch eine Referenztextur RT, die entlang der Soll-Bahn SB graviert werden kann. Die von der Kamera K erfassten Einzelbilder sind überlappend und in Fig. 3 mit den Bildmittelpunkten P dargestellt, die als Referenzpunkte dienen.

Die Soll-Bahn SB kann in einer oder in mehreren Kalibrierfahrten abgefahren werden, z.B. mit einer langsamen Kalibriergeschwindigkeit (P-Kurve, linkes Bild in Fig. 3) und mit einer schnellen Kalibriergeschwindigkeit (Q-Kurve, in Fig. 3 rechts dargestellt). Es ergeben sich unterschiedliche abgefahrenen Bahnen (P-Kurve und Q-Kurve).

Figur 3 zeigt wie geschwindigkeitsabhängige Ist-Bahnen mittels der erfassten Kamera-Einzelbilder (frames) bestimmt werden können. Wie oben erwähnt, ist beispielshaft eine Ist-Bahn bei langsamer Fahrt (P-Kurve) und bei schnellerer Fahrt (Q-Kurve) gezeigt. Sind primär dynamisch-induzierte Ursachen für die Bahnabweichungen wesentlich, so kann in einer bevorzugten Ausführungsform der Erfindung auch die P-Kurve als Soll-Bahn verwendet werden.

Die Bahnabweichungen, die mit dem hier vorgeschlagenen Vorgehen erfasst werden, können dynamisch induzierte oder statisch induzierte Konturabweichungen umfassen. Wird nur eine Kalibrierfahrt gemacht, so kann nicht eruiert werden, wie/woher die Bahnabweichungen induziert werden. Eine Trennung von dynamisch zu statisch induzierten Abweichungen kann jedoch abgeleitet werden, wenn mehrere Kalibrierfahrten bei unterschiedlicher Geschwindigkeit durchgeführt werden. Dabei werden Abweichungen, die unabhängig der Geschwindigkeit sind, als statisch, die anderen als dynamisch bezeichnet. Statische induzierte Abweichungen sind z.B. Hysterese-Effekte und/oder Umkehrspiel bei Achsantrieben. Gemäß einer vorteilhaften Weiterbildung ist es möglich, stationäre Bildanteile aus vollständiger Überlappung zweier oder mehrerer aufeinander folgender Bilder zu filtern. Aus dem gefilterten Muster kann prinzipiell auf die Art der stationären Bildanteile geschlossen werden (z.B. Düsenrand, Kontamination etc.).

In einer bevorzugten Ausführungsform der Erfindung kann es konfigurierbar sein, wie die Kalibrierfahrt ausgeführt wird (also mit welchen Kalibrierfahrtparametern, z.B. wie oft, in welcher Geschwindigkeit etc.) Dazu kann auf der Benutzerschnittstelle, HMI, eine Auswahlschaltfläche bereitgestellt werden. Es ist auch möglich eine automatische Bestimmung der Kalibrierfahrtparameter (z.B. Kalibriergeschwindigkeit) und/oder auf die Position der Konturabweichungsprüfung im Arbeitsraum vorzusehen.

Wichtig ist grundsätzlich, dass sich benachbarte Einzelbilder (ausreichend) überlappen und dass die Gravur der Referenztextur RT gut sichtbar ist. Denn somit ist sichergestellt, dass mittels Image-Stitching die Einzelbilder entlang der Ist-Bahn zusammengesetzt werden können und so die exakte Ist-Bahn rekonstruiert werden kann. Die Gravur dient grundsätzlich nur zur Erleichterung beim Image-Stitching. Der Image-Stitching Algorithmus kann aus der Folge von Einzelbildern und insbesondere aus den dynamischen Bildanteilen, die abgefahrene Bahn berechnen. Grundsätzlich werden beim Image-Stitching statische und dynamische Bildanteile berücksichtigt. Beispiele für mitbewegte (stationäre bzw. statische) Bildanteile sind die Düse, Düsenabschattungen, die Schneidfront, Abbildungsfehler oder Kontaminationen der Optik. Reflexionen ändern den Einfallswinkel über die Bildfolge und sind demnach nicht stationär (obschon die reflektierenden Oberflächenstrukturen stationär sind). Korrekte Verschiebevektoren werden jedoch nur aus den dynamischen Strukturen gewonnen. Deshalb müssen in dem Bildverarbeitungs-Algorithmus Massnahmen getroffen werden, um den Einfluss stationärer Bildanteile zu verringern (z.B. durch Filterung stationärer/statischer oder ähnlicher Bildanteile in zwei oder mehr aufeinanderfolgenden Bildern).

Konkret kann im Beispiel in Figur 3 die Ist-Bahn beschrieben werden, indem man von jedem Frame (Einzelbild) z.B. die Mitte bestimmt. Daraus ergeben sich die Punkte P1, P2,...

Die Punktekurve Pn kann an die Soll-Bahn SB gefittet werden, z.B. mit einem Algorithmus, basierend auf der Methode der kleinsten Quadrate (auf den Geraden sind keine dynamisch induzierten Abweichungen zwischen Soll- und Ist-Bahn zu erwarten). Die Abweichungen (insbesondere in den Ecken) der Bahnen entsprechen dem dynamisch induzierten Konturfehler.

Wenn primär Bahnungenauigkeiten aufgrund der Maschinendynamik erwartet werden, so kann alternativ zur Soll-Bahn SB aus der Maschinensteuerung auch die Rekonstruktion der abgefahrenen Bahn aus einer Langsam-Fahrt (P1, P2, ... Pn) als Soll-Bahn SB verwendet werden. Dabei können die Punkte Pn relativ zu einem Referenzpunkt bestimmt werden, wobei der Referenzpunkt ein gut identifizierbarer Anfangspunkt der Gravur bzw. Referenztextur RT sein kann. Gleiches wird gemacht mit der Videoaufzeichnung beim schnellen Abfahren der Gravur, was zur Ist-e Q führt. Die Kurven P und Q können dann in einem x-y-Koordinatensystem dargestellt werden. Die Abweichungen zwischen Ist- und Soll-Bahn werden offensichtlich. Vorteil der Methode, bei der die langsame Kalibrierfahrt als Soll-Bahn SB verwendet wird gegenüber der alternativen Methode (Verwendung der Maschinen Soll-Bahn) ist, dass keine Maschinen-SollBahnn verwendet werden müssen. Nachteilig ist hingegen, dass mehrere Ist-Bahnn mit unterschiedlicher Dynamik aufgenommen werden müssen.

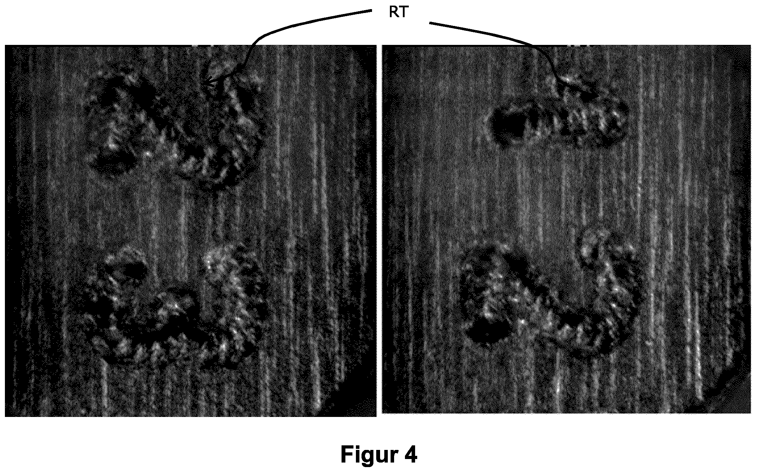

Fig. 4 zeigt ein Beispiel von benachbarten Einzelbildern mit sichtbarer Gravur bzw. Referenztextur RT (hier Zahlen). Dass die beiden benachbarten Bilder mithilfe der gravierten Zahlen gut gestitchted werden können, ist offensichtlich, wenn der Schneidkopf mittels der ersten Steuerbefehle instruiert worden ist, die Soll-Bahn SB abzufahren und die Kamera K mittels der zweiten Steuerbefehle instruiert worden ist, dabei entlang der Referenztextur RT die Bilder zu erfassen. Versuche haben gezeigt, dass zum Ausführen des Image-Stitching-Algorithmus zumindest eine Überlappung von mindestens 5%, bevorzugt von über 10% und noch bevorzugter von über 20% zwischen den aufeinanderfolgenden bzw. benachbarten Einzelbildern vorhanden sein muss (zwei aufeinanderfolgen Bilder mit einer Bildrate von 400 fps (fps, frames per second). In einer bevorzugten Ausführungsform der Erfindung kann der Überlappungsbereich über eine entsprechende Eingabemaske auf einer Benutzerschnittstelle im Vorfeld konfiguriert werden. Insbesondere ist es möglich, den Überlappungsbereich mit den verfügbaren Hardware-Ressourcen (Prozessorleistung) abzugleichen.

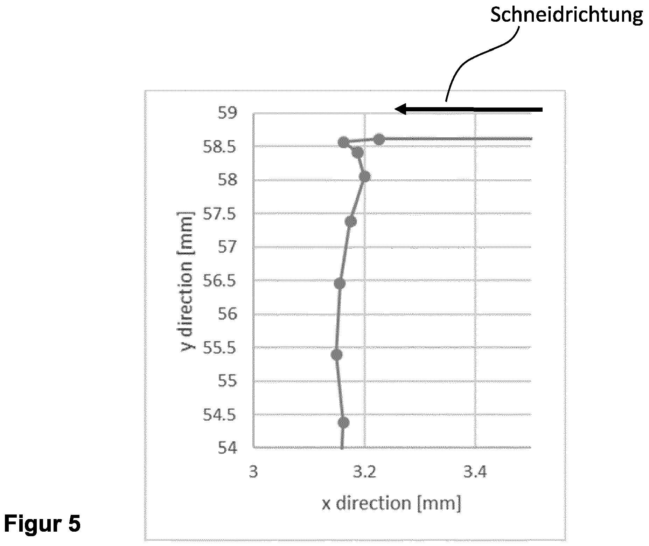

Fig. 5 zeigt ein Beispiel von Konturabweichungen in Form von «Eckenüberschwingern». Der in Fig. 5 nach links weisende Pfeil kennzeichnet die Schneidrichtung und die über der X- und Y-Achse aufgetragene Bahn ist die rekonstruierte mit dem Schneidkopf (tatsächlich) abgefahrene Bahn. Man erkennt die Bahnabweichungen an und nach der Ecke. Figur 5 zeigt die Rekonstruktion der tatsächlich mit dem Schneidkopf abgefahrenen (Ist-)Bahn, wobei die Soll-Bahn (nicht dargestellt) eine rechtwinklige Ecke darstellt. Die Abweichungen der Ist-Bahn zu einer rechtwinkligen Soll-Bahn, insb. die Überschwinger in der Ecke, sind offensichtlich.

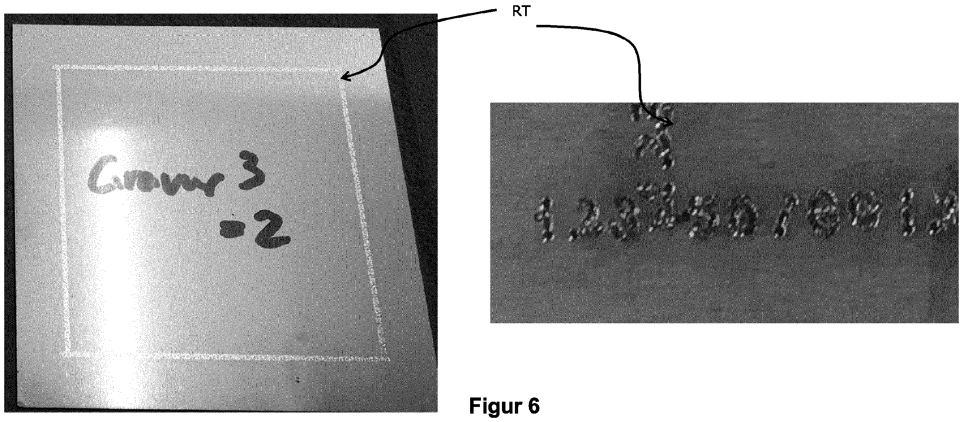

Fig. 6 zeigt ein Beispiel einer Referenztextur RT in Form einer Zahlenreihe.

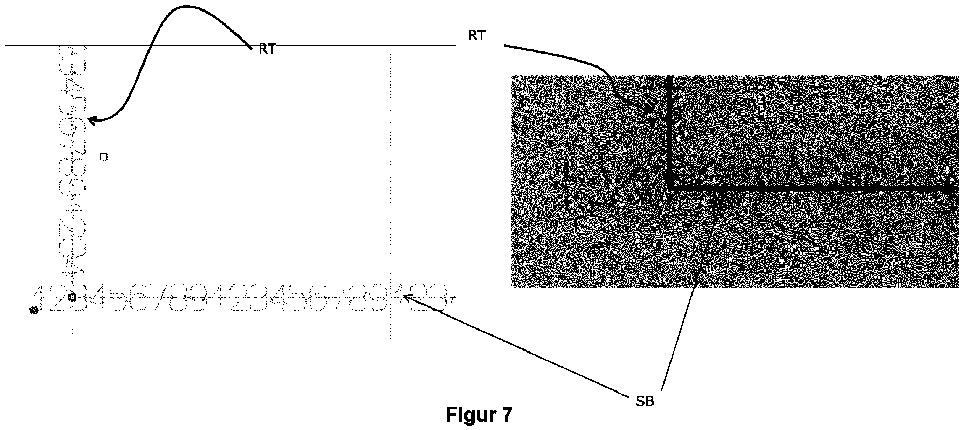

Fig. 7 zeigt die Referenztextur RT auf der linken Seite als Maschinenplan und in dem Bild rechts in real in das Blech gravierter Form. Die durchgezogenen Linien in linken und rechten Bild repräsentieren jeweils die Soll-Bahn SB. Hier ist zu erkennen, dass die Referenztextur RT auf oder zentral über der Soll-Bahn SB appliziert wird. Alternativ kann die Referenztextur RT jedoch auch neben der Soll-Bahn appliziert oder anderweitig vorgesehen werden (nicht gezeigt). Dann muss das Sichtfeld der Kamera K so eingestellt und auf die Position der Referenztextur RT abgestimmt werden, dass sie während der Kalibrierfahrt die Referenztextur RT vollständig oder teilweise erfassen kann, um eine Ortsauflösung bereitstellen zu können. Es sind auch Kombinationen der vorstehend erwähnten Alternativen möglich. So kann z.B. bei einer rechteckförmigen Soll-Bahn SB, die Referenztextur RT auf dem ersten langen Schenkel direkt auf der Soll-Bahn liegen und an dem angrenzenden kurzen Schenkel über der Soll-Bahn und an dem weiter angrenzenden zweiten langen Schenkel nicht auf der Soll-Bahn SB, sondern innenliegend neben dieser und bei dem weiter angrenzenden zweiten kurzen Schenkel außerhalb der Soll-Bahn. Der Abstand von der Soll-Bahn SB kann vorbestimmt oder konfigurierbar sein. Wichtig ist, dass das Sichtfeld (FoV) der Kamera so gewählt ist, dass die Referenztextur RT zumindest teilweise erfasst werden kann. Auch durch die genannten Alternativen kann das Image-Stitching robust durchgeführt werden.

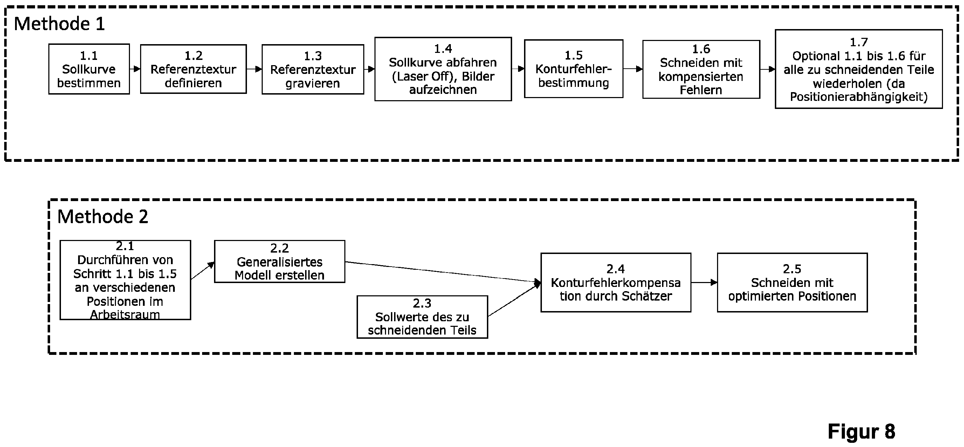

Zur Berechnung der Konturabweichungen kann gemäß einer bevorzugten Ausführungsform der Erfindung eine erste Methode 1 zur Anwendung kommen, die unter Bezugnahme auf **Figur 8** im Folgenden näher erläutert wird.

In Schritt 1.1 wird eine Soll-Bahn bestimmt. Als Soll-Bahn wird hier die Geometrie verstanden, welche über einer Referenztextur liegt. Auch die Bahn, auf der die Referenztextur angewendet werden soll, kann hier definiert werden, wenn diese nicht mit der Soll-Bahn (aus dem Schneidplan) übereinstimmen soll.

In Schritt 1.2 wird die Referenztextur (beispielsweise eine Zahlen- oder Buchstabenreihe) definiert. Dies erfolgt vorzugsweis automatisch und kann in Abhängigkeit von Schneidparametern (Düsenbreite etc.) berechnet werden. Der automatisch berechnete Vorschlag für die Referenztextur kann auf einer Mensch-Maschine-Schnittstelle, HMI, zum Zwecke der Bestätigung oder des Verwerfens (mit anschließender Neuberechnung) ausgegeben werden.

In Schritt 1.3 kann die vordefinierte oder berechnete Referenztextur mit dem Bearbeitungslaser auf ein Blech appliziert und/oder graviert werden. Dabei kann z.B. gleich das Blech verwendet werden, welches als nächstes bearbeitet werden soll.

In Schritt 1.4 wird die Soll-Bahn in einer Kalibrierfahrt abgefahren (ohne zu schneiden), wobei die Kamera K laufend überlappende Frames (Einzelbilder) aufnimmt. Zwecks optimierter Kameraaufnahmen wird synchron zu den Bildaufnahmen auch der Beleuchtungslaser eingeschaltet.

In Schritt 1.5 werden auf Basis der Bilderfassung (Schritt 1.4 während der Kalibrierfahrt) zur Rekonstruktion der real mit dem Schneidkopf abgefahrenen Ist-Bahn via Bildverarbeitungs-Algorithmus und insbesondere via Image-Stitching, die Kontourfehler bzw. die Abweichungen von der Soll-Bahn bestimmt. Die Bestimmung von Konturabweichungen kann mit verschiedenen Maßnahmen erreicht werden und/oder nach unterschiedlichen Vorgaben erfolgen.

So kann in einer ersten Variante, die Bestimmung des Fehlers durch ein Vergleichen von einer langsam gefahrenen Bahn und der entsprechend gestitchten Ist-Bahn mit einer schnell gefahrenen Bahn und entsprechend gestitchter (rekonstruierter) Ist-Bahn ausgeführt werden.

In einer zweiten Variante kann die Bestimmung des Fehlers bzw. der Bahnabweichungen durch Nutzung von der gestitchten Ist-Bahn (also Rekonstruktion der mit dem Schneidkopf abgefahrenen Bahn) und einer Maschinen-Soll-Bahn erfolgen (Differenzbildung).

In Schritt 1.6 kann anschließend ein Schneiden mit Kompensation der Konturfehler ausgeführt werden.

Optional können die vorstehend genannten Schritte an vordefinierbaren spezifischen Positionen im Arbeitsraum und/oder für alle oder ausgewählte zu schneidenden Werkstücke und/oder Teile ausgeführt werden, um der Positionsabhängigkeit der Konturfehlerbestimmung Rechnung zu tragen und zu berücksichtigen (in Fig. 8 mit Schritt 6 repräsentiert). Befinden sich die Soll-Bahn SB und die Referenztextur RT an einer Position im Arbeitsraum des Lasers, die außermittig ist (zum Beispiel an einem Ende des Arbeitstisches, so dass bestimmte Achsen vollständig ausgefahren sind), so treten andere Konturabweichungen auf als wenn die Position zentral und mittig im Arbeitsraum liegt. Deshalb kann es vorgesehen sein, die Kalibriefahrten an unterschiedlichen Positionen im Arbeitsraum auszuführen. Dafür können automatisch bestimmten Positionen vorkonfiguriert werden, die der Anwender dann annehmen oder verwerfen kann.

Die in Fig. 8 dargestellte Methode 2 betrifft dynamikabhängige Konturungenauigkeiten. Erwartungsgemäss sind dynamikabhängige Konturungenauigkeiten von der Lage auf dem Schneidtisch abhängig. Wird an verschiedenen Positionen auf dem Schneidtisch (d.h. im Arbeitsraum) die Konturgenauigkeit bzw. die Konturabweichungen mit dem hier beschriebenen Lösungsansatz bestimmt, kann damit ein generalisiertes Modell zur Konturfehler-Reduktion über den ganzen Arbeitsraum (arbeitsraumabhängiges Maschinenmodell) erstellt werden. Mithilfe eines solchen Modelles kann die Konturfehlerkompensation dann basierend auf den Sollwerten der zu schneidenden Teile berechnet und angewendet werden.

Das Prozedere der Methode 2 ist analog zu dem von Methode 1, indem Schritte 1.1 bis 4 ausgeführt werden, aber mit der Ergänzung, dass Schritt 1.1 bis 4 an verschiedenen Positionen im Arbeitsraum durchgeführt werden. Dadurch kann ein generalisiertes Modell zur Konturfehler Reduktion erstellen werden. Die Methode 2 kann die folgenden Schritte umfassen:

2.1 Ausführen von Schritt 1.1 bis 1.5 an verschiedenen Positionen im Arbeitsraum der Maschine;
2.2 Erstellen eines generalisierten, arbeitsraumabhängigen Konturfehlermodells;
2.3 Sollwerte des zu schneidenden Teils zu Verfügung stellen; die Sollwerte können insbesondere aus dem Schneidplan erfasst werden und unter Berücksichtigung der berechneten Abweichungen optimiert werden (z.B. durch Geschwindigkeitsreduktion in den Ecken).
2.4 Konturfehlerkompensation aufgrund der Sollwerte und des generalisierten Modells berechnen;
2.5 Schneiden mit optimierten Positionen.

Das erstellte generalisierte Modell kann auf beliebige Teile mit beliebigen Soll-Bahnen und Bahndynamiken angewendet werden. Eine Konturfehlerbestimmung (mit dem Schritt «Vorsehen einer Referenztextur» bzw. Gravieren,... und Modellerstellung) muss somit für künftige zu schneidende Teile nicht mehr gemacht werden. Der Arbeitsaufwand sinkt aufgrund des erstellten Modells beträchtlich.

Kernstück beim Bildfügen oder Image-Stitching-Algorithmus ist der Vergleich der Pixelwertverteilung von zwei oder mehr digitalen Bildern. Dabei werden jeweils zwei aufeinander folgende Einzelbilder so übereinandergelegt, dass daraus alle nicht leeren Überlappungsvarianten entstehen. In jeder Variante werden die Pixelwerte des Überlappungsgebiets subtrahiert, der Betrag (Norm) der Pixelwert-Differenzen berechnet und summiert (integriert). Die berechneten integrierten Differenznormen aller Überlappungsvarianten ergeben zusammen ein Wertefeld, dessen Grösse um Eins kleiner ist als die doppelte Einzelbildbreite (Einzelbildhöhe). Das absolute Minimum im Wertefeld der integrierten Differenznormen bestimmt definitionsgemäss diejenige Überlappungsvariante mit der besten Übereinstimmung. Der vertikale und horizontale Pixelabstand der Einzelbild-Nullpunkte der besten Überlappungsvariante sind die Komponenten des gesuchten Verschiebevektors.

Der zugehörige Algorithmus ist in Textbüchern zu Computer Vision detailliert beschrieben (z.B. «Computer Vision» von L. Shapiro und G. Stockman, erschienen bei Prentice Hall). Speziell für die Anwendung der Lasermaterialbearbeitung findet man die Beschreibung in der DE102005022095A1.

Dabei bestimmen verschiedene Einflussfaktoren die Qualität des gemessenen Verschiebevektors bezüglich Genauigkeit, Wiederholbarkeit und Eindeutigkeit. Bereits geringe Pixelwerteinflüsse können zu signifikanten Messfehlern im Verfahren des Standes der Technik führen. Die häufigsten sind geringer Bildkontrast, stationäre Bildanteile (über die Bildfolge gleichbleibende Formen), periodische Oberflächenstrukturen (aliasing) und Abbildungsfehler. Erfindungsgemäß wird ein kamerabasiertes Wegmessverfahren bereitgestellt, welches robust ist gegenüber signifikanten Messfehlern. Das Verfahren soll hinreichend exakt sein, um die gemessenen Abweichungen von Soll-Positionen und Soll-Mustern von den Messfehlern unterschieden zu können. Dies ist insbesondere deshalb kritisch, weil die gemessenen Abweichungen meist im Bereich von einigen Mikrometern bis einigen 10 Mikrometern liegen, womit sie einerseits im Bereich von typischen Pixelgrössen (Auflösungsgrenze) und andererseits im Bereich der gewünschten Fertigungstoleranzen für Schneidproben liegen.

Dies wird erreicht mit einem mehrfach referenzierten Oberflächenmessverfahren mit Kamera K, das die Verschiebungsvektoren von sich überlappenden und aufeinander folgenden Bilder einer Bildfolge durch optimales Zusammenfügen misst.

In der ersten Referenzierung (Vorsehen der Referenztextur RT) wird die Referenztextur RT als nichtlineares und nichtperiodisches und nicht-repetitives Muster auf die Werkstückoberfläche graviert (örtliche Messreferenz, kalibrierte Referenztextur RT). Dies hat den Vorteil, dass die dynamischen (mitbewegten) Bildanteile auch bei hoher Fahrdynamik und kleinen überlappenden Bildbereichen deutlicher von unerwünschten Bildanteilen unterschieden und signifikante Messfehler reduziert werden. An Stelle eines gravierten Musters könnte auch ein beliebiges anderes massstabgetreues Konturmuster verwendet werden, zum Beispiel Schablonen, oder gedruckte oder elektronisch dargestellte Schwarz-Weiss-Zeichnungen. Anstelle des Gravierens, können andere Methoden angewendet werden, um die Referenztextur RT vorzusehen (z.B. Auflegen eines oberflächenstrukturierten Blechs).

In einer zweiten Referenzierung (Kalibrierfahrt, ohne Laserschneiden) nimmt die mit dem Schneidkopf mitfahrende Kamera K das nicht-lineare und nicht periodische und nicht-repetitive Konturmuster auf (zeitliche Messreferenz) auf. Dabei entsteht eine Bildfolge, in welcher sich die aufeinanderfolgenden Einzelbilder in einem Teilbereich überlappen. Die räumliche Distanz zwischen den aufeinander folgenden Einzelbilder ist gegeben durch die Verschiebungsvektoren. Dabei nimmt die Messgenauigkeit des Verschiebevektors mit grösserem Überlappungsbereich zwischen Folgebildern zu. Dies kann durch eine Referenzfahrt mit sehr tiefer Geschwindigkeit erreicht werden. Dadurch werden auch die Abweichungen zur geplanten Soll-Bahn SB minimiert. Daraus kann durch lineare Regression der Soll-Inkrement und den Verschiebevektoren die metrische Pixelgrösse auf wenige Prozent genau skaliert werden. Aus der Regression wird ebenfalls eine Streuung (Standardabweichung) der metrischen Pixelgrösse berechnet.

In einer - optionalen - dritten Referenzierung (weitere Kalibrierfahrt) werden die Verschiebevektoren bei hohen Bahnbeschleunigungen gemessen, in Längeneinheiten skaliert zu gemessenen Bahnpositionen kumulativ summiert und schliesslich mit den Nominalpositionen der Soll-Bahn SB verglichen. Daraus resultiert die Abweichung der tatsächlich abgefahrenen und gemessenen Bahn (aus der Rekonstruktion der mit dem Schneidkopf abgefahrenen Bahn) von der Soll-Bahn SB. Dabei kann mit der aus der zweiten Referenzierung bekannten Streuung der Pixelgrösse festgestellt werden, ob die gemessene Abweichung innerhalb der Messgenauigkeit liegt. Es versteht sich von selbst, dass die Parametrierung der Bildfolgeaufnahme von bei der zweiten und dritten Referenzierung identisch sein muss (Vergleichbarkeit).

Das beschriebene Bildfüge-Verfahren nach dem Stand der Technik wird nach den drei Referenzierungsschritten zwar weniger signifikante Messfehler liefern. Jedoch verbleiben im Allgemeinen immer noch zu viele fehlerhafte Überlappungen für die praktische Anwendung. Das liegt daran, dass das absolute Minimum der integrierten Differenznormen nicht das gewünschte ist, oder dass kein eindeutig ausgezeichnetes Minimum gefunden werden kann. Die Gründe dafür liegen in der Qualität der untersuchten Bildfolge. Jede Wahl eines falschen Optimums resultiert in einem signifikanten Messfehler.

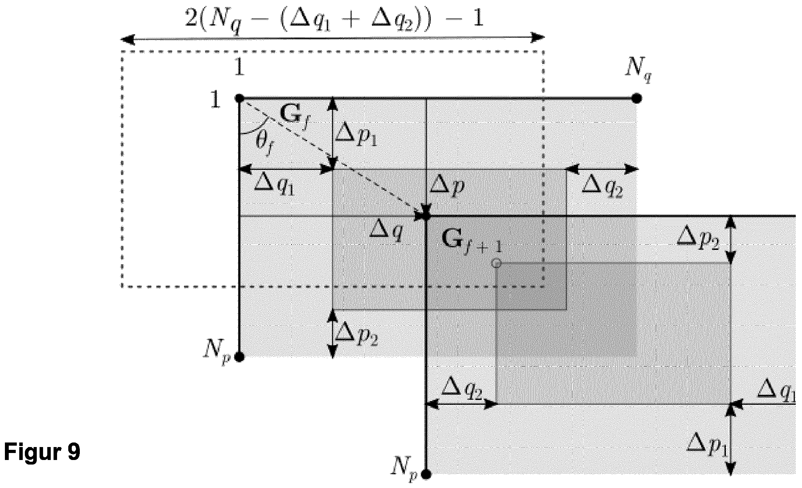

Deshalb wird in der vorliegenden Erfindung ergänzend zu den Referenzierungen ein mehrstufiges Vorgehen zum Auffinden des korrekten Optimums vorgeschlagen. Dies wird im Folgenden unter Bezugnahme auf **Fig. 9** näher erläutert.

An Stelle der integrierten Differenznormen wird für den Vergleich der überlappenden Teilbereiche eine Variante des gewichteten Mittels verwendet, um die benachbarten Pixel über den ganzen Verschiebebereich gleich zu gewichten.

Der Verschiebebereich wird um die nominalen Achspositionen der Soll-Bahn SB gelegt und so gross wie nötig skaliert. Dadurch steigt die Wahrscheinlichkeit erheblich, dass ein gefundenes Optimum zugleich das gesuchte globale Optimum ist.

Die gefundenen Optima werden über eine Relationsfunktion der benachbarten Pixelwerte ausgezeichnet.

Die Variante der gewichteten integrierten Differenznorm ist eine Funktion des Verschiebevektors (Delta p, Delta q)^T und lautet:

$$\Delta g_{f:\Delta p,\Delta q} = \frac{1}{w(N_p - \Delta p)w(N_q - \Delta q)} \sum_{p=p_0}^{p_1} \sum_{q=q_0}^{q_1} |g_{f+1:p+\Delta p,q+\Delta q} - g_{f:pq}|$$

Die Bedeutung der einzelnen Variablen ist

g        einheits-normierter Pixelwert
f        Index des Einzelbildes
w       Gewichtungsfunktion
Delta p   Horizontalverschiebung
Delta q   Vertikalverschiebung
$N_p$     Breite eines Einzelbildes
$N_q$     Höhe eines Einzelbildes

Die Gewichtungsfunktion dient dazu, die integrierten Differenznormen am Rand des Verschiebungsbereichs gegenüber denjenigen im zentralen Bereich zu verstärken. Wird die Identität als Gewichtungsfunktion gewählt, so ergibt sich das arithmetische Mittel.

Die Summationsgrenzen sind gegeben mit

$$p = \begin{cases} p_0 = 1 + \Delta p_1 \ldots N_p - \Delta p_1 + \Delta p = p_1 & \Delta p \le 0 \\ p_0 = 1 + \Delta p_2 + \Delta p \ldots N_p - \Delta p_2 = p_1 & \Delta p > 0 \end{cases}$$

$$q = \begin{cases} q_0 = 1 + \Delta q_1 \ldots N_q - \Delta q_1 + \Delta q = q_1 & \Delta q \le 0 \\ q_0 = 1 + \Delta q_2 + \Delta q \ldots N_q - \Delta q_2 = q_1 & \Delta q > 0 \end{cases}$$

Darin definieren die Delta p1,2 und Delta q1,2 die Position und Grösse des Verschiebebereichs. Die Komponenten Delta p und Delta q des Verschiebevektors werden über den Verschiebebereich horizontal

$$\Delta p = 1 - (N_p - 2\Delta p_1) \ldots 0 \ldots N_p - 2\Delta p_2 - 1$$

und vertikal

$$\Delta q = 1 - (N_q - 2\Delta q_1) \ldots 0 \ldots N_q - 2\Delta q_2 - 1$$

variiert.

Die Relationsfunktion setzt den Pixelwert des gefundenen Optimums in Bezug zu den benachbarten Pixelwerten. Prinzipiell kann eine beliebige sinnvolle Definition der Relationsfunktion verwendet werden. Als besonders effektiv im Hinblick auf die Auszeichnung des korrekten Optimums hat sich jedoch die logische UND-Verknüpfung aus den folgenden zwei Relationsfunktionen erwiesen:

1. Das Optimum hat innerhalb eines Nachbarschaftsradius am meisten Pixel, deren Wert grösser ist als der Pixelwert im Mittelpunkt.

2. Die Summe aller Pixelwerte innerhalb des Nachbarschaftsradius vermindert um den Pixelwert des aktuellen Optimums ist grösser als diejenige aller anderen gefundenen Optima.

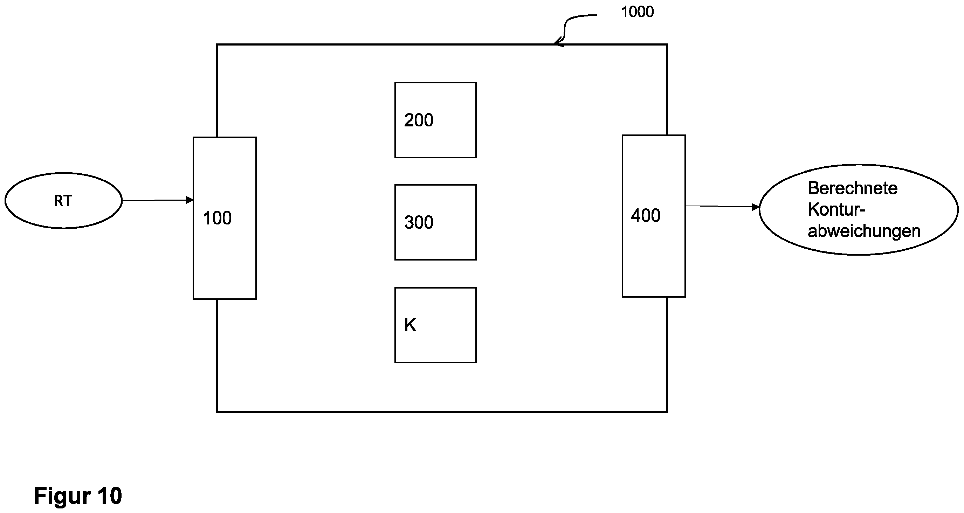

**Fig. 10** ist ein Blockdiagramm einer Konturprüfvorrichtung 1000. Die Konturprüfvorrichtung 1000 umfasst zumindest zwei Schnittstellen, eine Referenztexturschnittstelle 100 zum Einlesen einer Referenztextur RT entlang der Soll-Bahn SB, die insbesondere zum Schneiden einer Kontur gemäß Schneidplan definiert ist und eine Ausgabeschnittstelle 400, die zur Ausgabe der berechneten Abweichungen bestimmt ist.

Die Konturprüfvorrichtung 1000 umfasst des Weiteren eine Steuerung 200, die zur Ansteuerung der Laserbearbeitungsmaschine bestimmt ist, so, dass der Schneidkopf 10 die Soll-Bahn SB im Rahmen einer Kalibrierfahrt abfährt.

Die Konturprüfvorrichtung 1000 umfasst des Weiteren zumindest eine Kamera K, wobei die Steuerung zum Ansteuern der zumindest einen Kamera K zum kontinuierlichen Erfassen von überlappenden Einzelbildern der Referenztextur RT entlang der in der Kalibrierfahrt abgefahrenen Bahn bestimmt ist.

Die Konturprüfvorrichtung 1000 umfasst des Weiteren einen Prozessor 300, der zur Ausführung eines Bildverarbeitungs-Algorithmus zur Rekonstruktion der mit dem Schneidkopf abgefahrenen Bahn aus den erfassten überlappenden Einzelbildern der Referenztextur RT bestimmt ist. Der Prozessor 300 ist eingerichtet zum Berechnen von Abweichungen zwischen der Rekonstruktion der mit dem Schneidkopf abgefahrenen Bahn und der Soll-Bahn SB.

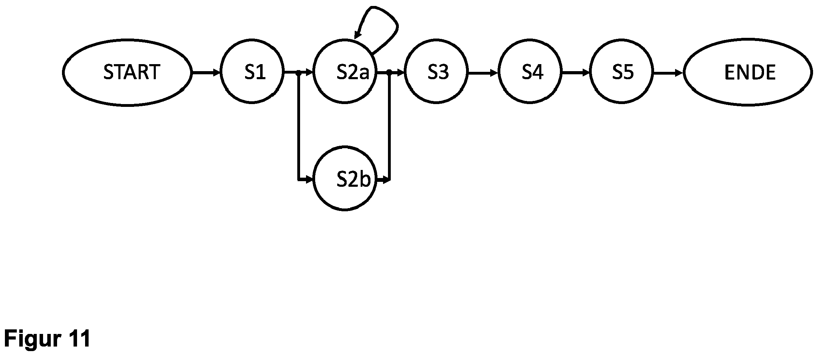

In **Fig. 11** ist ein Ablaufdiagramm gemäß einer bevorzugten Ausführungsform der Erfindung gezeigt. Nach dem Start des Verfahrens zur Kalibrierung zur Konturkorrektur wird in Schritt S2 die Referenztextur RT vorgesehen (z.B. Gravieren in Form einer Gravierfahrt). In Schritt S2a werden erste Steuerbefehle zum Abfahren der Soll-Bahn (erste Kalibrierfahrt) bereitgestellt und in Schritt S2b werden zweite Steuerbefehle zum Ansteuern der Kamera K bereitgestellt. In Schritt S3 wir der Bildverarbeitungs-Algorithmus, insbesondere der Image-Stitching-Algorithmus ausgeführt. In Schritt S4 werden die Konturabweichungen kamerabasiert berechnet. In Schritt S5 werden die berechneten Konturabweichungen als Ergebnisdatensatz auf einer Ausgabeschnittstelle 400 ausgegeben. Danach kann das Kalibrierverfahren enden.

Es liegt auf der Hand, dass in Schritt S2a mehrere Kalibrierfahrten (ohne Laserschneiden), z.B. in unterschiedlichen Kalibrierfahrtparametern (z.B. unterschiedliche Geschwindigkeit) ausgeführt werden können. Dies ist in Fig. 11 durch den auf sich selbst verweisenden Pfeil bei Schritt S2a gekennzeichnet.

In einer Weiterbildung der Erfindung ist es möglich, die berechneten kamerabasierten Konturabweichungen auch auf Laserbearbeitungsmaschinen zu übertragen, die keine Kamera aufweisen, indem ein Maschinenmodell erstellt wird. Das Maschinenmodell kann z.B. zentral in einer Datenbank hinterlegt sein, auf die eine Menge von Laserbearbeitungsmaschinen über entsprechende Datenverbindungen Zugriff haben. Eine Laserbearbeitungsmaschine, die ohne eine Kamera ausgestattet ist, kann dann unter Zugriff auf das Maschinenmodell, und ggf. noch Anpassungen an den Maschinetyp Konturabweichungen schätzen und entsprechende Gegenmassnahmen zur Konturkorrektur vornehmen.

Das Verfahren zur kamerabasierten Konturfehlermessung kann des Weiteren für die Erstellung eines künstlichen Neuronalen Netzes (kNN) zur Konturfehlerschätzung verwendet werden. Das kNN kann ebenfalls auf Maschinensystemen ohne Kamerasystem verbessernd wirken. Das kontinuierliche Sammeln und Speichern von Konturfehlermessdaten und Maschinendaten kann zum Updaten von kNN und zur verbreiteten Nutzung von den kNN für Maschinensysteme ohne Kamerasystem verwendet werden.

Darüber hinaus kann das kamerabasierte Verfahren zur Berechnung von Konturabweichungen ereignisbasiert (Laden eines neuen Schneidplans, oder Laden von anderen Werkstücken etc.) und/oder nach einem Zeitmuster, z.B. periodisch (z.B. monatlich, halbjährlich, ...) automatisch auf der Maschine angestoßen werden. Wird die ermittelte Abweichung über die Lebensdauer grösser, so indiziert dies ein möglicher Maschinenverschleiss/Antriebsverschleiss/schlechte Funktionsweise der Maschine. Diese Entwicklung wird erfasst und aufgezeichnet. Aus den erfassten Daten kann proaktiv eine Wartung angestoßen werden oder die Daten können im Rahmen eines Predictive Maintenance verwendet werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Laserbearbeitungsmaschinen mit einer koaxialen Kamera angewendet werden kann, sondern auch für solche, die eine andere Kameraanordnung haben, die zur Erfassung der Referenztextur RT während einer Kalibrierfahrt geeignet sind. Des Weiteren können die Bauteile der Konturprüfvorrichtung auf mehreren physikalischen Produkten verteilt realisiert oder implementiert sein. So kann beispielsweise das Verfahren vollständig auf der Laserbearbeitungsmaschine ausgeführt werden oder es können ressourcenintensive Berechnungen, wie die Rekonstruktion der abgefahrenen (IST-) Bahn mittels des Bildverarbeitungsalgorithmus auch auf eine andere Hardwareinstanz ausgelagert werden. So könnten beispielsweise die erfassten Einzelbilder und die ersten Steuerbefehle an einen zentralen Server ausgelagert werden, der die Berechnung (Rekonstruktion) ausführt und dann nur die berechneten Abweichungen an die Laserbearbeitungsmaschine zurückgibt.

**Patentansprüche**

1. Verfahren zum Berechnen von Bahnabweichungen von einer Soll-Bahn (SB) eines Schneidkopfes (10) einer Laserbearbeitungsmaschine, umfassend folgende Verfahrensschritte:

    (1) Vorsehen (S1) einer entlang der Soll-Bahn (SB) verlaufenden Referenztextur (RT);
    (2) Bereitstellen von ersten Steuerbefehlen (S2a) zum Abfahren der Soll-Bahn (SB) mit dem Schneidkopf (10) und Bereitstellen von zweiten Steuerbefehlen (S2b) zum kontinuierlichen Erfassen von überlappenden Einzelbildern der Referenztextur (RT) entlang der abgefahrenen Bahn, mittels wenigstens einer Kamera (K);
    (3) Rekonstruktion der mit dem Schneidkopf (10) abgefahrenen Bahn aus den erfassten überlappenden Einzelbildern der Referenztextur (RT) mittels eines Bildverarbeitungs-Algorithmus (S3);
    (4) Berechnen von Abweichungen (S4) zwischen der Rekonstruktion der mit dem Schneidkopf abgefahrenen Bahn und der Soll-Bahn (SB).

2. Verfahren nach Patentanspruch 1, bei dem in einer Konfigurationsphase die Referenztextur (RT) aus einem vorgegebenen Musterschatz ausgewählt und/oder eingelesen wird.

3. Verfahren nach einem der vorangehenden Ansprüche, bei dem das Vorsehen der Referenztextur (RT) erfolgt, indem die Referenztextur (RT) mittels dem Schneidkopf (10) des Bearbeitungslasers auf ein Werkstück (9) graviert wird und/oder bei dem ein mit der Referenztextur (RT) versehenes flächiges Objekt unterhalb des Schneidkopfes (10) des Bearbeitungslasers und über dem Werkstück (9) platziert wird.

4. Verfahren nach einem der vorangehenden Ansprüche, bei dem das Abfahren der Soll-Bahn (SB) in Schritt (2) ohne ein Aktivieren des Lasers erfolgt.

5. Verfahren nach einem der vorangehenden Ansprüche, bei dem das Abfahren der Soll-Bahn (SB) in Schritt (2) mit zumindest einer konfigurierbaren Kalibriergeschwindigkeit und/oder einer konfigurierbaren Beschleunigung in einer Kalibrierfahrt erfolgt.

6. Verfahren nach einem der vorangehenden Ansprüche 1 bis 5, bei dem als Soll-Bahn (SB) zumindest eine Kontur aus einem Schneidplan bestimmt wird und wobei in Schritt (2) die Soll-Bahn (SB) zumindest zweimal abgefahren wird, nämlich: erstens mit einer Kalibriergeschwindigkeit in einer ersten Kalibrierfahrt und zweitens mit einer Produktivgeschwindigkeit in einer zweiten Kalibrierfahrt, wobei die Kalibriergeschwindigkeit geringer, insbesondere 80% bis 99% geringer, als die Produktivgeschwindigkeit ist.

7. Verfahren nach einem der vorangehenden Ansprüche, bei dem zur Rekonstruktion der mit dem Schneidkopf abgefahrenen Bahn mit dem Bildverarbeitungs-Algorithmus, insbesondere mit dem Image-Stitching-Algorithmus, zusätzlich zu den erfassten Einzelbildern Encoder-Messwerte von beteiligten Maschinenachsen verwendet werden, um den Bildverarbeitungs-Algorithmus zu beschleunigen und/oder robuster zu machen.

8. Verfahren nach einem der vorangehenden Ansprüche, bei dem synchron zu dem Erfassen der Einzelbilder eine Beleuchtungsquelle (3), insbesondere ein Beleuchtungslaser, eingeschaltet wird.

9. Verfahren nach einem der vorangehenden Ansprüche, bei dem das Abfahren der Soll-Bahn (SB) in Schritt (2) mehrfach und/oder mit unterschiedlichen Kalibrierfahrtparametern, insbesondere mit unterschiedlicher Beschleunigung und/oder unterschiedlichem Vorschub, ausgeführt wird.

10. Verfahren nach einem der vorangehenden Ansprüche, bei dem der Image Stitching-Algorithmus aus einer Folge von N Einzelbildern N-1 Verschiebevektoren rekonstruiert, wobei N eine natürliche Zahl grösser als 2 ist.

11. Verfahren nach einem der vorangehenden Ansprüche, bei dem der Image Stitching-Algorithmus Differenznormen über alle Überlappungen im Suchbereich der aufeinanderfolgenden Einzelbilder integriert.

12. Verfahren nach einem der vorangehenden Ansprüche, bei dem der Image Stitching-Algorithmus auf die integrierten Differenznormen eine örtliche Gewichtungs- und/oder Näherungsfunktion anwendet.

13. Verfahren nach einem der vorangehenden Ansprüche, bei dem aus den berechneten Abweichungen ein Abweichungsmodell berechnet wird und/oder bei dem aus den berechneten Abweichungen und erfassten Positionskoordinaten des Schneidkopfes (10) auf einem Schneidtisch ein Abweichungsmodell berechnet wird.

14. Verwendung eines Verfahrens nach einem der vorangehenden Patentansprüche zum Berechnen einer konturfehlerkorrigierten Schneidbahn.

15. Konturprüfvorrichtung (1000) zum Berechnen von Bahnabweichungen von einer Soll-Bahn (SB) eines Schneidkopfes (10) einer Laserbearbeitungsmaschine, umfassend:

— Eine Referenztexturschnittstelle (100) zum Einlesen einer Referenztextur (RT) entlang der Soll-Bahn (SB), die insbesondere zum Schneiden einer Kontur definiert ist;
— Eine Steuerung (200), die zur Ansteuerung der Laserbearbeitungsmaschine bestimmt ist, so, dass der Schneidkopf (10) die Soll-Bahn (SB) abfährt;
— Zumindest eine Kamera (K), wobei die Steuerung zum Ansteuern der zumindest einen Kamera (K) zum kontinuierlichen Erfassen von überlappenden Einzelbildern der Referenztextur (RT) entlang der abgefahrenen Bahn bestimmt ist;
— Einen Prozessor (300), der zur Ausführung eines Bildverarbeitungs-Algorithmus zur Rekonstruktion der mit dem Schneidkopf abgefahrenen Bahn aus den erfassten überlappenden Einzelbildern der Referenztextur (RT) bestimmt ist; und
— wobei der Prozessor (300) zum Berechnen von Abweichungen zwischen der Rekonstruktion der mit dem Schneidkopf abgefahrenen Bahn und der Soll-Bahn (SB) bestimmt ist; und wobei die Konturkorrekturvorrichtung (1000) weiterhin umfasst:
— eine Ausgabeschnittstelle (400), die zur Ausgabe der berechneten Abweichungen bestimmt ist.

16. Computerprogramm, umfassend Befehle, die bei der Ausführung des Computerprogramms durch einen Computer diesen veranlassen, das Verfahren gemäß einem der vorangehenden Verfahrensansprüche auszuführen.

Figur 1

Soll-Bahn, SB

Ist-Kurve (tatsächlich abgefahrene Bahn) bei hoher Geschwindigkeit

Schneidrichtung

**Figur 2**

EP 4 145 233 A1

x

Q-Kurve

P-Kurve

Q1 Q2

RT

Referenzpunkt

P1 P2

schnell

langsam

Gravur entlang Sollkurve

Kamera-Einzelbild/Frame

**Figur 3**

Figur 4

Figur 5

Figur 6

Figur 7

**Methode 1**

| 1.1<br>Sollkurve<br>bestimmen | → | 1.2<br>Referenztextur<br>definieren | → | 1.3<br>Referenztextur<br>gravieren | → | 1.4<br>Sollkurve abfahren<br>(Laser Off), Bilder<br>aufzeichnen | → | 1.5<br>Konturfehler-<br>bestimmung | → | 1.6<br>Schneiden mit<br>kompensierten<br>Fehlern | → | 1.7<br>Optional 1.1 bis 1.6 für<br>alle zu schneidenden Teile<br>wiederholen (da<br>Positionierabhängigkeit) |

**Methode 2**

| 2.1<br>Durchführen von<br>Schritt 1.1 bis 1.5<br>an verschiedenen<br>Positionen im<br>Arbeitsraum | → | 2.2<br>Generalisiertes<br>Modell erstellen |

| 2.3<br>Sollwerte des zu<br>schneidenden Teils |

| 2.4<br>Konturfehlerkompensa<br>tion durch Schätzer | → | 2.5<br>Schneiden mit<br>optimierten Positionen |

**Figur 8**

Figur 9

**Figur 10**

EP 4 145 233 A1

**Figur 11**

Europäisches
Patentamt

European
Patent Office

Office européen
des brevets

# EUROPÄISCHER RECHERCHENBERICHT

**Nummer der Anmeldung**

**EP 21 19 4737**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 777 880 A (BOWEN DALE THOMAS [US] ET AL) 7. Juli 1998 (1998-07-07) | 1,2, 4-10, 13-16 | INV. G05B19/42 |
| A | * Spalte 3, Zeile 20 - Spalte 10, Zeile 10 * | 3,11,12 | ADD. B25J9/16 B23Q35/128 |
| A | WO 94/23886 A1 (CADCAM PUNCH LTD [GB]; HORTON NORMAN [GB]; BELL JOHN KEVIN [GB]) 27. Oktober 1994 (1994-10-27) * Seiten 3-11 * | 1-16 | |
| A | KR 2018 0040305 A (PARKEUIJI LTD [KR]) 20. April 2018 (2018-04-20) * Absätze [0025] - [0061] * | 1-16 | |

**RECHERCHIERTE SACHGEBIETE (IPC)**

G05B
B25J
B23K

Der vorliegende Recherchenbericht wurde für alle Patentansprüche erstellt

| Recherchenort | Abschlußdatum der Recherche | Prüfer |
|---|---|---|
| Den Haag | 24. Februar 2022 | Prokopiou, Platon |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 21 19 4737**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**24-02-2022**

| Im Recherchenbericht angeführtes Patentdokument | Datum der Veröffentlichung | Mitglied(er) der Patentfamilie | Datum der Veröffentlichung |
|---|---|---|---|
| US 5777880 A | 07-07-1998 | KEINE | |
| WO 9423886 A1 | 27-10-1994 | AT 146714 T | 15-01-1997 |
| | | AU 6434194 A | 08-11-1994 |
| | | DE 69401269 T2 | 12-06-1997 |
| | | EP 0693017 A1 | 24-01-1996 |
| | | JP H08508680 A | 17-09-1996 |
| | | US 5614115 A | 25-03-1997 |
| | | WO 9423886 A1 | 27-10-1994 |
| KR 20180040305 A | 20-04-2018 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

**In der Beschreibung aufgeführte Patentdokumente**

- DE 102018217940 A1
- DE 102005022095 A1
- EP 1314510 A1
- DE 102011103282 A1
- DE 102011003717 A1

**In der Beschreibung aufgeführte Nicht-Patentliteratur**

- **N. LANZ ; D. SPESCHA ; S. WEIKERT ; K. WEGENER.** Efficient Static and Dynamic Modelling of Machine Structures with Large Linear Motions. *International Journal of Automation Technology,* 2018, vol. 12, 622-630